# EUROPÄISCHE PATENTSCHRIFT

(11) **EP 1 516 694 B1**
(45) Veröffentlichungstag und Bekanntmachung des Hinweises auf die Patenterteilung: **24.01.2007**
(21) Anmeldenummer: 04020695.5
(22) Anmeldetag: 01.09.2004
(51) Int. Cl.: B23Q 3/155, B23Q 7/04, B23Q 3/157

(54) **Werkzeugmaschine mit einem eine Transportkette aufweisenden Werkzeugmagazin**
Machine tool with a tool magazine comprising a transport chain for the tools
Machine-outil avec magasin à outils comprenant une chaîne de transport des outils

(30) Priorität: 17.09.2003 DE 10344642
(43) Veröffentlichungstag der Anmeldung: 23.03.2005
(73) Patentinhaber: Chiron-Werke GmbH & Co. KG, 78532 Tuttlingen (DE)
(72) Erfinder: Prust, Dirk, 78532 Tuttlingen (DE); Winkler, Hans-Henning, Dr., 78532 Tuttlingen (DE)
(74) Vertreter: Otten, Hajo

(56) Entgegenhaltungen:
- WO-A-03/006203
- WO-A-03/022515
- DE-U- 8 915 599
- US-A- 5 971 904
- US-A- 6 066 078

## Beschreibung

Die vorliegende Erfindung betrifft eine Werkzeugmaschine nach dem Oberbegriff von Anspruch 1.

Derartige Werkzeugmaschinen sind umfangreich aus dem Stand der Technik (siehe, z.B., WO 03/006203-A).

Die bekannten Werkzeugmaschinen dienen zur Fertigung von Werkstücken, an denen in einer Aufspannung verschiedene Arbeitsvorgänge mit unterschiedlichen Werkzeugen durchgeführt werden müssen. Zu diesem Zweck wird das Werkstück in einer Vorrichtung auf einen Werkstücktisch aufgespannt, der in dem Arbeitsraum der Werkzeugmaschine angeordnet ist.

Die Werkzeugmaschine weist eine in den drei Koordinatenrichtungen relativ zu dem Werkstücktisch verfahrbare Werkzeugspindel auf, an deren Stirnseite eine Werkzeugaufnahme vorgesehen ist, in die Werkzeuge zur Bearbeitung des aufgespannten Werkstückes eingespannt werden können. Um eine schnelle Bearbeitung des Werkstückes zu ermöglichen, erfolgt der Wechsel der Werkzeuge automatisch, wozu an der Werkzeugmaschine ein Magazin vorgesehen ist, in dem die verschiedenen, während der Bearbeitung des Werkstückes erforderlichen Werkzeuge vorrätig gehalten werden.

Insbesondere dann, wenn die Zahl der benötigten Werkzeuge sehr groß ist, werden so genannte Kettenmagazine eingesetzt, bei denen die einzelnen Kettenglieder als Träger für die Werkzeuge ausgestaltet sind. Die Träger bilden so eine Transportkette, die als Endloskette ausgebildet sein kann und in einer Transportrichtung hin- und hergefahren wird. Auf diese Weise ist es möglich, das jeweils als nächstes benötigte Werkzeug durch Fahren der Transportkette entweder in oder gegen Transportrichtung in seine Übergabeposition zu der Spindel zu bringen. Dieses Verfahren der Transportkette wird auch als Teilen bezeichnet.

Bei einem Werkzeugwechsel wird zunächst ein Leerplatz an die Übergabeposition verfahren, worauf hin dann das zuletzt im Einsatz befindliche Werkzeug in diesen Leerplatz abgelegt wird. Die Übergabe zwischen der Werkzeugaufnahme in der Werkzeugspindel und dem Speicherplatz in der Transportkette erfolgt bspw. mit Hilfe eines Werkzeugwechslers, der einen Greiferarm aufweist, mit dem er das Werkzeug an einem dafür speziell vorgesehenen Bund ergreift, woraufhin das Werkzeug dann aus der Werkzeugspindel ausgestoßen wird. Der Greifer legt das Werkzeug dann in dem Speicherplatz ab, wo es durch Federkraft gehalten wird.

Andererseits ist es auch möglich, auf den Werkzeugwechsler zu verzichten und die Speicherplätze unmittelbar mit der Spindel anzufahren. Dazu wird das vordere Ende des Magazins in den Arbeitsraum hineingefahren oder die Spindel aus dem üblichen Arbeitsbereich heraus über das Kettenmagazin gefahren, so dass die Spindel über dem Speicherplatz positioniert werden kann. Diese Art des Werkzeugwechsels wird auch als "Pick-up" bezeichnet.

Nachdem auf diese Weise das zuvor im Einsatz gewesene Werkzeug in einem Leerplatz abgelegt wurde, wird das Magazin geteilt, so dass der Speicherplatz mit dem als nächstes einzuwechselnden Werkzeug in die Übergabeposition gefahren wird. Diese Übergabeposition ist stirnseitig an dem Kettenmagazin vorgesehen, das in einem Bogen in den Arbeitsraum hinein- und wieder herausgeführt wird.

Wenn das neue Werkzeug entweder im Pick-up-Verfahren oder mit Hilfe eines Werkzeugwechslers in die Spindel eingesetzt wurde, wird das Kettenmagazin aus dem Arbeitsraum zurückgefahren bzw. mit einer entsprechenden Schutzabdeckung versehen. Auf diese Weise wird verhindert, dass bei der Bearbeitung des Werkstückes entstehende Späne das Magazin und/oder die in dem Magazin gelagerten Werkzeuge verschmutzen.

Bei den bekannten Werkzeugmaschinen ist es also zum Werkzeugwechsel immer erforderlich, das Magazin zu teilen. Im ungünstigsten Fall befindet sich das nächste Werkzeug am entgegengesetzten Ende der Transportkette, so dass der Speicherplatz mit dem als nächstes einzuwechselnden Werkzeug den halben möglichen Verfahrweg zurücklegen muss, bis er in die Übergabeposition gelangt. Sofern der Speicherplatz mit dem neuen Werkzeug in Transportrichtung weiter als den halben Verfahrweg von der Übergabeposition entfernt ist, wird die Transportkette entgegen der Transportrichtung bewegt, was dazu führt, dass dann ein kürzerer als der halbe Transportweg zurückgelegt werden muss.

Bei den insoweit beschriebenen Werkzeugmaschinen und Magazinen ist es von Nachteil, dass die mittlere Werkzeugwechselzeit von der Länge der Transportkette und damit von der Anzahl der maximal zu speichernden Werkzeuge abhängt. Je mehr Speicherplätze eine derartige Transportkette aufweist, desto länger ist sie und desto mehr Zeit wird für einen Werkzeugwechsel aus der ungünstigsten Speicherposition heraus benötigt.

Die bekannte Anordnung ist insbesondere dann von Nachteil, wenn Werkzeuge mit extrem unterschiedlichen Abmaßen zum Einsatz kommen sollen. Das Werkzeug mit den maximalen Abmessungen bestimmt dann nämlich die Größe eines Kettengliedes, das als Träger und damit als Speicherplatz für die Werkzeuge ausgelegt sein muss. Da aus Gründen der Antriebstechnik, der Führung und der sonstigen Kinematik alle Kettenglieder die gleichen Abmaße haben, ist bei den bekannten Kettenmagazinen die Speicherdichte für Werkzeuge extrem gering. Mit anderen Worten, zwischen den einzelnen Speicherplätzen ist viel Leerraum vorhanden, um den möglichen Abmaßen extrem großer Werkzeuge Rechnung zu tragen.

Wegen der hohen Verfahrgeschwindigkeit der Werkzeugspindel relativ zu dem Werkstück lassen sich die mit einem Werkzeug durchzuführenden Bearbeitungsvorgänge in extrem kurzer Zeit ausführen. Verglichen mit diesen kurzen Bearbeitungszeiten ist aus den oben genannten Gründen die Werkzeugwechselzeit verhältnismäßig groß, was insgesamt als Nachteil angesehen wird.

Diese große Werkzeugwechselzeit ergibt sich insbesondere infolge der geringen Speicherdichte der bekannten Kettenmagazine.

Derartige Kettenmagazine werden aber nicht nur bei Einspindelmaschinen sondern auch bei so genannten Doppelspindelmaschinen eingesetzt, bei denen simultan zwei Werkstücke mit zwei Werkzeugspindeln bearbeitet werden, die an einem gemeinsamen Träger angeordnet sind. Die beiden Werkzeugspindeln weisen zueinander einen definierten Abstand auf, wobei die Werkstücke auf dem Werkstücktisch in eben diesem definierten Abstand aufgespannt sind. Auf diese Weise ist es möglich, zwei Werkzeuge simultan zu bearbeiten, wenn in jeder Werkzeugspindel das gleiche Werkzeug eingespannt ist.

Wenn es bei derartigen Doppelspindelmaschinen gewünscht ist, eine hohe Anzahl von Werkzeugen vorrätig zu halten, werden auch bei Doppelspindelmaschinen die oben diskutierten Kettenmagazine eingesetzt. Dabei ist es zum einen möglich, jeder Werkzeugspindel ein eigenes Kettenmagazin zuzuordnen, was konstruktiv aufwendig und dementsprechend kostenintensiv ist. Ferner ergeben sich dann auch für Doppelspindelmaschinen die oben diskutierten Nachteile.

Andererseits ist es auch möglich, beiden Werkzeugspindeln gemeinsam ein Kettenmagazin zuzuordnen. Wenn der Werkzeugwechsel dabei im Pick-up-Verfahren erfolgen soll, müssen die einzelnen Speicherplätze zueinander einen Abstand aufweisen, der dem Mittenabstand der beiden Werkzeugspindeln entspricht. Dies bedeutet, dass der Umlenkbogen des Magazins im Arbeitsraum entsprechend breit ausgelegt sein muss, was dazu führt, dass das Magazin mit seiner Kontur im Arbeitsraum stört bzw. nur aufwendig in den Arbeitsraum hinein- und wieder herausgefahren werden kann. Ferner bestimmt der Abstand zwischen den beiden Werkzeugspindeln, der bspw. bei 250 mm liegt, die Speicherdichte des Kettenmagazins. Durch die großen Abstände zwischen den einzelnen Speicherplätzen einerseits sowie andererseits deshalb, weil jetzt für einen Werkzeugwechsel jeweils zwei Speicherplätze vorgesehen werden müssen, erhöht sich die Gesamtlänge des Magazins noch einmal erheblich, was die beschriebenen nachteiligen Auswirkungen auf die Werkzeugwechselzeit hat.

Die WO-03/006203-A beschreibt ein Teilemagazin aus miteinander verbundenen Trägern, die nach Art einer Kette gemeinsam antreibbar sind. An einem Träger können mehrere Aufnahmen für Teile vorgesehen sein, wobei als Teile bspw. Werkzeuge verwendet werden können. Die einzelnen Träger können als Scheibe oder Würfel ausgebildet sein und müssen an der Übergabestelle ggf. noch gedreht werden.

Das DE-89 15 599-U beschreibt ein Kettenmagazin, bei dem auf der Transportkette quer zu dessen Transportrichtung Kassetten angeordnet sind, in denen nebeneinander Werkzeuge aufgenommen sind, die radial von der Transportkette abstehen.

Vor diesem Hintergrund liegt der vorliegenden Anmeldung die Aufgabe zu Grunde, ein Werkzeugmagazin der eingangs genannten Art derart weiterzubilden, das bei konstruktiv einfachem Aufbau ein schneller Werkzeugwechsel sowohl bei Einspindel- als auch bei Zwei- oder Mehrspindelmaschinen möglich ist.

Erfindungsgemäß wird diese Aufgabe bei der eingangs genannten Werkzeugmaschine dadurch gelöst, dass der zumindest eine Träger zumindest einen in Transportrichtung und zumindest einen gegen Transportrichtung weisenden Speicherplatz aufweist, der einen in oder gegen Transportrichtung offenen U-förmigen Halter aufweist.

Der zumindest eine Träger kann dabei zumindest zwei im Wesentlichen quer zur Transportrichtung nebeneinander liegende Speicherplätze aufweisen.

Die der Erfindung zu Grunde liegende Aufgabe wird auf diese Weise vollkommen gelöst.

Die Erfinder der vorliegenden Anmeldung haben nämlich erkannt, dass sich die Packungsdichte bei einem Kettenmagazin dadurch erhöhen lässt, dass vorzugsweise von der Transportkette getrennte Träger für Werkzeuge vorgesehen sind, wobei die Träger sich im Wesentlichen quer zur Transportrichtung erstrecken. Unter "im Wesentlichen quer" wird auch eine leicht schräge Anordnung der Träger verstanden. Auf diese Weise ist es möglich, je Träger zwei oder mehr Speicherplätze vorgesehen. Wenn die Speicherplätze nebeneinander angeordnet sind, können je Träger ein extrem großes, wenige mittlere oder mehrere kleine Werkzeuge vorrätig gehalten werden. Durch ein extrem großes Werkzeug wird jetzt die Geometrie der gesamten Transportkette nicht beeinflusst, große Werkzeuge nehmen damit lediglich den Speicherplatz für kleinere Werkzeuge in "ihrem" Träger mit in Anspruch. Auf diese Weise ergibt sich eine variable Packung von Werkzeugen in dem neuen Magazin, so dass sich durch diese parallele Speichermöglichkeit pro Kettenplatz, also pro Träger, die Speicherkapazität des neuen Magazins deutlich erhöht. Mit der erhöhten Speicherkapazität geht aus den oben genannten Gründen aber auch die Werkzeugwechselzeit zurück, da die mittlere Transportlänge eines Trägers zur Übergabeposition verglichen mit bekannten Kettenmagazinen mit gleicher Speicherkapazität deutlich verringert wird.

Wenn die Anordnung der Werkzeuge dabei so getroffen wird, dass pro Träger neben mit Werkzeugen beschickten Speicherplätzen immer auch ein Leerplatz vorgesehen ist, lässt sich mit der neuen Werkzeugmaschine ein extrem schneller Werkzeugwechsel durchführen. Das zuletzt im Einsatz befindliche Werkzeug wird von der Werkzeugspindel in dem leeren Speicherplatz abgelegt, woraufhin die Spindel lediglich den kurzen Weg zum nächsten Speicherplatz des selben Trägers verfährt und dort ein neues Werkzeug aufnimmt. Mit anderen Worten, es ist nicht mehr erforderlich, zwischen dem Ablegen des zuvor im Einsatz gewesenen Werkzeuges und dem Aufnehmen des nächsten Werkzeuges das Magazin zu teilen.

Ein weiterer Vorteil bei der neuen Werkzeugmaschine ist darin zu sehen, dass die Ausgestaltung der Transportkette jetzt völlig unabhängig von der Ausgestaltung der Träger für die Werkzeuge vorgenommen werden kann. Damit ist es möglich, unabhängig von den Abmaßen der Träger feingliedrige Transportketten einzusetzen, was eine entsprechend schmalere Umlenkung an dem in den Arbeitsraum hinein ragenden stirnseitigen Ende des Magazins ermöglicht. Hierdurch wird die im Arbeitsraum störende Kontur deutlich verringert, wobei auch deutlich weniger konstruktiver Aufwand erforderlich ist, um den in den Arbeitsraum hinein ragenden Teil des Magazins vor Spänen etc. zu schützen.

Wenn an dem Träger zwei in Transportrichtung in entgegengesetzte Richtungen weisende Speicherplätze vorgesehen sind, kann die neue Werkzeugmaschine mit zwei Übergabepositionen versehen werden, an denen Werkzeuge zwischen dem Träger und der Werkzeugaufnahme überführbar sind. An der ersten Übergabeposition ist dann ein in Transportrichtung weisender Speicherplatz und an der zweiten Übergabeposition ein gegen Transportrichtung weisender Speicherplatz positionierbar. Der Träger kann dabei aus zwei unabhängigen Haltern bestehen, die "in entgegengesetzte Richtung" weisen und paarweise zusammenhängen.

Mit anderen Worten, ein Träger präsentiert seinen in Transportrichtung liegenden Speicherplatz an der ersten Übergabeposition und seinen gegen Transportrichtung liegenden Speicherplatz dann, wenn der Träger in die zweite Übergabeposition verfahren wurde.

Bei Einspindelmaschinen kann z.B. die in Transportrichtung liegende Übergabeposition jeweils einen Leerplatz aufweisen, in den ein auszuwechselndes Werkzeug abgelegt werden kann, während der gegen Transportrichtung weisende Speicherplatz das neue Werkzeug enthält.

Zum Werkzeugwechsel wird der Träger damit in die erste Übergabeposition gefahren, woraufhin die Werkzeugspindel ihr Werkzeug in den Leerplatz ablegt. Dann wird der Träger in die zweite Übergabeposition gefahren, wo die Werkzeugspindel das nächste Werkzeug aufnimmt.

Es ist andererseits möglich, dass der Träger sowohl in als auch gegen Transportrichtung zwei oder mehr Speicherplätze aufweist.

Der Werkzeugwechsel erfolgt dann zunächst an den in Transportrichtung liegenden Speicherplätzen, nämlich wenn sich der Träger in der ersten Übergabeposition befindet, und dann an den gegen Transportrichtung liegenden Speicherplätzen, wenn der Träger nämlich in die zweite Übergabeposition verfahren wurde.

Dadurch, dass ein Träger Werkzeuge jetzt sozusagen janusartig speichert, wird die Speichermöglichkeit des Magazins noch einmal erhöht, was aus den oben erwähnten Gründen zu einer weiteren Reduzierung der mittleren Werkzeugwechselzeit führt. Pro Kettenplatz sind jetzt nämlich nicht nur parallel nebeneinander Werkzeuge gespeichert, die parallele Speichermöglichkeit wurde pro Kettenplatz sogar noch einmal verdoppelt.

Besonders bevorzugt ist es dabei, wenn die Transportkette auf den Arbeitsraum zu weisend in einem Bogen geführt wird, wobei beidseits des Bogens eine der beiden Übergabeposition vorgesehen ist.

Auch durch diese Maßnahme wird die Werkzeugwechselzeit reduziert, denn jetzt können zwei Träger gleichzeitig in Übergabepositionen gefahren werden, wobei der eine Träger seine in Transportrichtung liegenden Speicherplätze und der andere Träger seine gegen Transportrichtung liegenden Speicherplätze zum Werkzeugwechsel anbietet. Auf diese Weise ist bei einer Einspindelmaschine ein mehrfacher Werkzeugwechsel möglich, ohne dass das Magazin geteilt werden muss. Die Spindel fährt vielmehr zwischen den verschiedenen Speicherplätzen hin und her, um Werkzeuge abzulegen und aufzunehmen.

In einer Weiterbildung ist es bevorzugt, wenn die neue Werkzeugmaschine zwei im Abstand zueinander angeordnete Werkzeugspindeln aufweist.

Hier ist von Vorteil, dass die eine Werkzeugspindel an der ersten Übergabeposition und die andere Werkzeugspindel an der zweiten Übergabeposition den Werkzeugwechsel vollziehen kann.

Dabei ist es besonders bevorzugt, wenn die beiden Übergabepositionen einen Mittenabstand zueinander aufweisen, der dem Abstand zwischen den beiden Werkzeugspindeln entspricht.

Hier ist von Vorteil, dass der Werkzeugwechsel im Pick-up-Verfahren jetzt für beide Werkzeugspindeln synchron durchgeführt werden kann. Wenn an jeder Übergabeposition zwei oder mehr Speicherplätze bereitgestellt werden, ergeben sich die oben im Zusammenhang mit der Einspindelmaschine diskutierten Vorteile des sehr schnellen Werkzeugwechsels.

Da die Träger jetzt sozusagen seitlich von der Transportkette abstehen, kann das Magazin auch bei Doppelspindelmaschinen eingesetzt werden, ohne dass die Umlenkung der Transportkette in den Arbeitsraum sehr breit ausgelegt sein muss.

Pro Kettenplatz werden bei dieser Ausgestaltung jetzt sowohl Werkzeuge für die erste Werkzeugspindel als auch Werkzeuge für die zweite Werkzeugspindel bereitgestellt. Auch dies führt zu einer Erhöhung der Packungsdichte des Magazins für Doppelspindelmaschinen, was aus den genannten Gründen zu einer Verringerung der Werkzeugwechselzeit beiträgt.

Es sei noch erwähnt, dass die zeitgleich in den beiden Werkzeugspindeln einzusetzenden Werkzeuge in zwei an der Transportkette hintereinander angeordneten Trägern gespeichert sind, wobei diese Werkzeuge dann aufeinander zu weisen und bei der Umlenkung des ersten Trägers um den Bogen, mit dem die Transportkette in den Arbeitsraum hinein weist, sozusagen parallel zueinander im Arbeitsraum angeboten werden.

Ein weiterer Vorteil bei dieser Konstruktion ist darin zu sehen, dass in der Übergabeposition kein Träger nach vorne in den Arbeitsraum vorsteht, wo seine Kontur stören würde.

Auch bei einer Doppelspindelmaschine ist die neue Konstruktion also sehr platzsparend und ermöglicht einen extrem schnellen Werkzeugwechsel. Selbstverständlich lassen sich auch hier Werkzeuge unterschiedlicher Abmaße speichern, ohne dass die Speicherkapazität insgesamt so reduziert wird, wie dies im Stand der Technik der Fall ist.

Allgemein ist es noch bevorzugt, wenn an jedem Träger ein Verriegelungsteil angeordnet ist, das ein in dem Träger aufgenommenes Werkzeug formschlüssig hält.

Bei dieser Maßnahme ist von Vorteil, dass die Verfahrgeschwindigkeit der Transportkette gegenüber aus dem Stand der Technik bekannten Transportketten deutlich erhöht werden kann. Bei hoher Transportgeschwindigkeit besteht nämlich insbesondere bei der Umlenkung der Träger um den in den Arbeitsraum hinein weisenden Bogen der Transportkette die Gefahr, dass die Werkzeuge wegen der hohen Fliehkräfte aus dem Halter herausgeschleudert werden. Da im Stand der Technik Federn zur Sicherung der Werkzeuge in den Speicherplätzen verwendet werden, ist die Transportgeschwindigkeit bei bekannten Magazinen begrenzt. Durch die formschlüssige Verriegelung wird jetzt die Schwachstelle Feder beseitigt, so dass die Transportgeschwindigkeit verglichen mit dem Stand der Technik erhöht werden kann. Dieser Effekt wird noch verstärkt, wenn die Halter in oder gegen Transportrichtung offen sind, denn dann können die Werkzeuge radial nach außen nicht herausgeschleudert werden. Im Umkehrschluss bedeutet dies, dass die mittlere Werkzeugwechselzeit weiter verringert wird.

Die höhere Transportgeschwindigkeit ergibt sich bei der neuen Werkzeugmaschine auch dadurch, dass eine feingliedrige Kette verwendet werden kann, die aus kinematischen Gründen schneller beschleunigt und abgebremst werden kann als die grobgliedrigen Ketten, wie sie im Stand der Technik verwendet werden.

Dabei ist es bevorzugt, wenn das Verriegelungsteil das Werkzeug freigibt, wenn sich der Träger an einer Übergabeposition befindet, wobei das Verriegelungsteil vorzugsweise eine quer zur Transportrichtung verschiebbare Verriegelungsplatte mit einem Positionierteil ist, dem an der Übergabeposition ein weiteres Positionierteil zugeordnet ist.

Hier ist von Vorteil, dass die Freigabe der Verriegelungsplatte in der Übergabeposition sozusagen automatisch erfolgt. Sobald ein Träger sich in Übergabeposition befindet, greifen die beiden Positionierteile ineinander, wodurch die Verriegelungsplatte verschiebbar wird.

Insbesondere dann, wenn die Speicherplätze durch in oder gegen Transportrichtung offene U-förmige Halter gebildet werden, kann das Werkzeug nach Freigabe der Verriegelungsplatte jetzt nach vorne aus dem Speicherplatz herausgezogen werden, die Verriegelungsplatte verschiebt sich automatisch quer zur Transportrichtung.

Auch diese Maßnahme trägt damit zur Verringerung der Werkzeugwechselzeit bei, denn die Werkzeuge sind unmittelbar aus den Haltern entnehmbar, wenn diese sich in der Übergabeposition befinden.

Weitere Vorteile ergeben sich aus der Beschreibung und der beigefügten Zeichnung.

Die Erfindung ist in der Zeichnung dargestellt und wird in der nachfolgenden Beschreibung näher erläutert. Es zeigen:
- Fig. 1: eine neue Werkzeugmaschine in schematischer Vorderansicht;
- Fig. 2: eine Draufsicht auf das bei der Werkzeugmaschine aus Fig. 1 verwendete Magazin für die Werkzeuge, in nicht maßstabsgetreuer Darstellung; und
- Fig. 3: eine Draufsicht auf einen bei dem Magazin aus Fig. 2 verwendeten Träger für Werkzeuge.

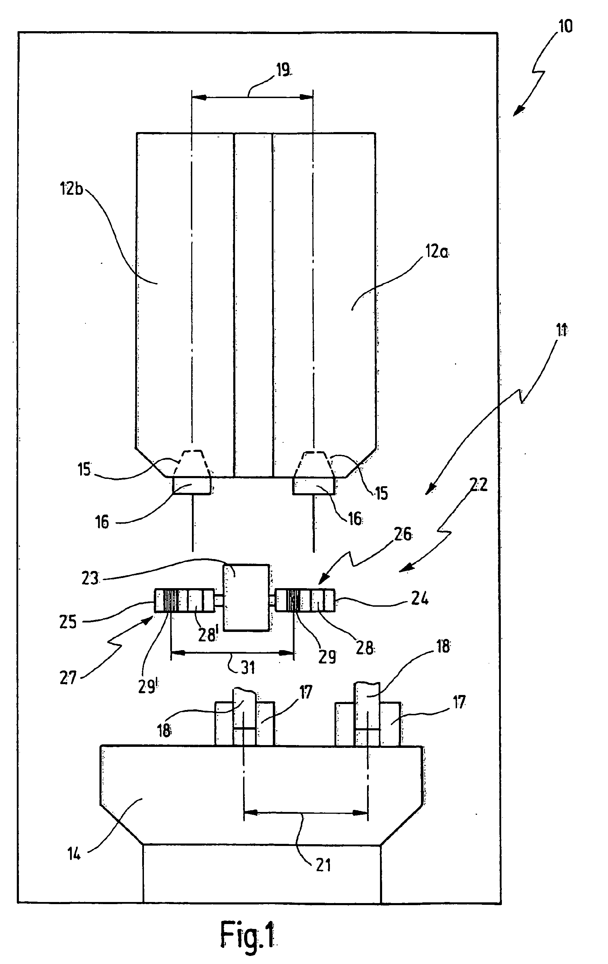

In Fig. 1 ist mit 10 schematisch in Vorderansicht eine Werkzeugmaschine dargestellt, die einen Arbeitsraum 11 aufweist, in dem zwei Werkzeugspindeln 12a und 12b relativ zu einem Werkstücktisch 14 verfahrbar sind.

Jede Werkzeugspindel 12a, 12b weist eine übliche Werkzeugaufnahme 15 auf, in die jeweils ein Werkzeug 16 eingespannt ist.

Mit Hilfe der Werkzeuge 16 werden in zwei Vorrichtungen 17 auf dem Werkstücktisch 14 eingespannte Werkstücke 18 bearbeitet.

Die Werkzeugspindeln 12a und 12b weisen zueinander einen bei 19 angedeuteten Abstand auf, der einem bei 21 angedeuteten Abstand zwischen den Vorrichtungen 17 und damit den Werkstücken 18 entspricht. Auf diese Weise ist es möglich, mit den Werkzeugspindeln 12a und 12b synchron die Werkstücke 18 zu bearbeiten.

In dem Arbeitsraum 11 ist bei 22 ein Magazin für Werkzeuge 16 angedeutet, das üblicherweise hinter den Werkzeugspindeln 12a und 12b angeordnet ist und lediglich zum Werkzeugwechsel in den Arbeitsraum 11 hineingefahren wird.

Das Magazin 22 umfasst ein bei 23 angedeutetes Kettengehäuse, über das seitlich ein erster Träger 24 nach rechts und ein zweiter Träger 25 nach links übersteht. Der Träger 24 befindet sich in einer ersten Übergabeposition 26 und der Träger 25 in einer zweiten Übergabeposition 27. Der Träger 24 ist zum Werkzeugwechsel an der Werkzeugspindel 12a und der Träger 25 zum Werkzeugwechsel an der Werkzeugspindel 12b vorgesehen.

Beide Träger 24, 25 weisen einen leeren Speicherplatz 28 bzw. 28' auf, in den das in den Werkzeugspindeln 12a, 12b eingespannte Werkzeug 16 abgelegt werden kann. Ferner ist in beiden Trägern 24, 25 ein weiterer Speicherplatz 29, 29' vorgesehen, der mit einem Werkzeug bestückt ist, das als nächstes in die Werkzeugspindeln 12a, 12b eingewechselt werden soll.

Die Speicherplätze 28 und 28' bzw. die Speicherplätze 29 und 29' weisen zueinander einen bei 31 angedeuteten Abstand auf, der dem Abstand 19 zwischen den Werkzeugspindeln 12a und 12b entspricht.

Auf diese Weise ist es möglich, zunächst synchron die Werkzeuge 16 in den Speicherplätzen 28, 28' abzulegen und dann Werkzeuge aus den Speicherplätzen 29, 29' zu entnehmen.

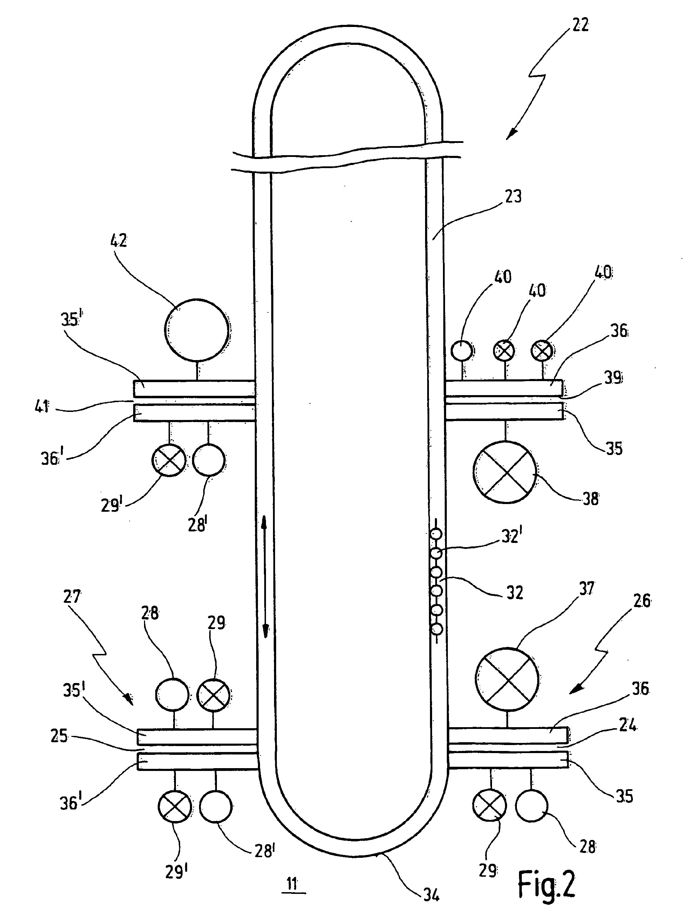

Das Magazin 22 aus Fig. 1 ist in Fig. 2 in einer schematischen Draufsicht gezeigt, wobei die Darstellung nicht maßstabsgetreu ist.

In Fig. 2 ist zu erkennen, dass in dem Kettengehäuse 23 eine Transportkette 32 läuft, die aus Kettengliedern 32' gebildet ist. Die Transportkette 32 ist in sich geschlossen und kann in einer bei 33 angedeuteten Transportrichtung sowohl im als auch gegen den Uhrzeigersinn sozusagen im Kreis verfahren werden. Im Arbeitsraum 11 beschreibt das Kettengehäuse 23 und damit die Transportkette 32 stirnseitig einen Bogen 34, der eine Umlenkung um 180° ermöglicht.

Beidseits des Bogens 34 sind in den Übergabepositionen 26 und 27 die Träger 24 und 25 angedeutet, wie dies aus Fig. 1 bereits bekannt ist.

Jeder Träger 24, 25 weist einen vorderen Halter 35, 35' sowie einen hinteren Halter 36, 36' auf, die paarweise zusammenhängen. An diesen Haltern 35, 36, 35', 36' sind die Speicherplätze 28, 29, 28', 29' schematisch angedeutet.

Der Träger 24 weist an seinem hinteren Halter 36 einen Speicherplatz 37 für ein extrem großes Werkzeug auf. Dem Speicherplatz 37 ist ein weiterer Speicherplatz für ein extrem großes Werkzeug 38 zugeordnet, der an dem vorderen Halter 35 eines Trägers 39 angeordnet ist. Der Träger 39 weist an seinem hinteren Halter 36 drei Speicherplätze 40 für kleinere Werkzeuge auf.

In Fig. 2 ist bei 41 noch ein weiterer Träger zu sehen, dessen hinterer Halter 36' mit Speicherplätzen 28' und 29' versehen ist, während sein vorderer Halter 35' einen Speicherplatz 42 für ein großes Werkzeug trägt.

Die Anordnung ist dabei so getroffen, dass der vordere Halter 35, 35' jeweils in der rechten Übergabeposition 26 seine Speicherplätze zum Werkzeugwechsel anbietet, während der hintere Halter 36, 36' seine Speicherplätze zum Werkzeugwechsel dann anbietet, wenn sich der zugeordnete Träger 24, 25, 39, 41 in der linken Übergabeposition 27 befindet.

Dies bedeutet mit anderen Worten, dass Werkzeuge, die zeitgleich in die beiden Werkzeugspindeln 12a und 12b aus Fig. 1 eingesetzt werden sollen, immer in in Transportrichtung hintereinander liegenden Trägern aufeinander zu weisend gespeichert werden müssen.

Wenn in Fig. 2 die Transportkette 32 jetzt einmal im Uhrzeigersinn teilt, bewegt sich der Träger 24 in die Übergabeposition 27 und bietet jetzt den Speicherplatz 37 zum Werkzeugwechsel an. Der Träger 39 hat sich dabei in die Übergabeposition 26 bewegt und bietet jetzt den Speicherplatz 38 zum Werkzeugwechsel an.

In Fig. 2 ist zu erkennen, dass das Magazin 22 eine hohe Speicherdichte aufweist, die sowohl die Speicherung von extrem kleinen Werkzeugen an den Speicherplätzen 40 als auch von extrem großen Werkzeugen an den Speicherplätzen 37, 38 und 42 ermöglicht. Verglichen mit den Trägern 24, 25, 39 und 41 sind die Kettenglieder 32' sehr fein ausgelegt, so dass der Bogen 34 sehr schmal ausgebildet werden kann. Seitlich von dem Bogen 34 stehen die Träger 24, 25 ab, die deutlich größere Querabmaße aufweisen können, als es der Breite des Bogens 34 entspricht. Dies ist in der schematischen Darstellung der Fig. 2 nicht zu erkennen.

Der Abstand zwischen zwei an der Transportkette 32 hintereinander angeordneten Trägern 41, 25, 24, 39 bestimmt sich durch den umfänglichen Abstand zwischen den beiden Übergabepositionen 26 und 27. Da der Bogen 34 sehr schmal ausgebildet sein kann, ist auch der umfängliche Abstand zwischen Trägern 24 und 25 in den Übergabepositionen 26 und 27 gering, was andererseits bedeutet, dass sich eine hohe Anzahl von Trägern 24, 25, 39, 41 hintereinander an der Transportkette 32 anordnen lässt.

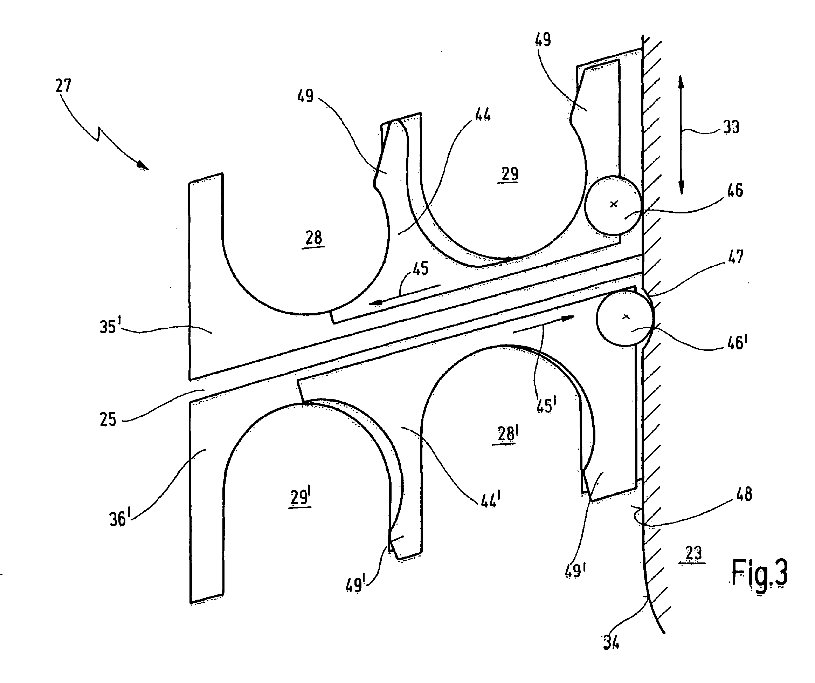

In Fig. 3 ist in einer Draufsicht der Halter 25 in der Übergabeposition 27 im größeren konstruktiven Detail gezeigt.

Während die Träger 24, 25, 38, 39, 41 in Fig. 2 senkrecht zur Transportrichtung 33 angeordnet sind, verlaufen die Träger 35', 36' leicht schräg zur Transportrichtung 33.

In Fig. 3 ist zu erkennen, dass die Halter 35' und 36' jeweils zwei in bzw. gegen Transportrichtung 33 offene U-förmige Aufnahmen für Werkzeuge bilden. Diese Aufnahmen sind die Speicherplätze 28, 28', 29 und 29'.

Auf den Haltern 35' und 36' sind zwei Verriegelungsplatten 44 und 44' angeordnet, die quer zur Transportrichtung 33 verschiebbar sind, was durch Pfeile 45 und 45' angedeutet ist. An den Verriegelungsplatten 44 und 44' sind Rollen 46 und 46' angeordnet, die sich mit den Verriegelungsplatten 44 und 44' verschieben lassen.

Die Verriegelungsplatte 44' auf dem Halter 36' ist in Richtung des Pfeiles 45' verschoben, wobei die Rolle 46' in eine Mulde 47 eingreift, die in einer Seitenwand 48 des Kettengehäuses 23 vorgesehen ist. An den Verriegelungsplatten 44, 44' sind noch Nasen 49 und 49' vorgesehen, die in der für den Halter 35' gezeigten Stellung der Verriegelungsplatte 44 ein in den Speicherplätzen 28 und 29 aufgenommenes Werkzeug formschlüssig verriegelt. Die Verriegelungsplatte 44 wird in der gezeigten Position dadurch gehalten, dass die Rolle 46 durch die Seitenwand 48 in Richtung des Pfeiles 45 gedrückt wird. Mit anderen Worten, solange die Rolle 46 nicht auf eine Mulde 47 trifft, kann die Verriegelungsplatte 44 nicht so verschoben werden, dass die Werkzeuge freikommen, die in den Speicherplätzen 28 und 29 sitzen.

Der Halter 36' befindet sich dagegen in der Übergabeposition 27, der die Mulde 47 zugeordnet ist. Die Verriegelungsplatte 44' kann in Richtung des Pfeiles 45 verschoben werden, da die Rolle 46' in die Mulde 47 eingreifen kann. Auf Grund der Kontur der Nase 49' verschiebt sich die Verriegelungsplatte 44' in Richtung des Pfeiles 45', wenn Werkzeuge in Fig. 3 nach unten, also in Transportrichtung 33, aus den Speicherplätzen 28' bzw. 29' herausgezogen bzw. in diese hineingeschoben werden. Es ist somit nicht erforderlich, die Verriegelungsplatte 44' mit einem eigenen Betätigungsmechanismus zu versehen.

Wenn das Magazin erneut teilt, wird der Träger 25 in Fig. 3 nach oben bewegt, was bedeutet, dass die Rolle 46' aus der Mulde 47 herausrollt, so dass die Verriegelungsplatte 44' entgegengesetzt zu dem Pfeil 45' verschoben wird und Werkzeuge formschlüssig in dem Halter 36' verriegelt, die sich in den Speicherplätzen 28' bzw. 29' befinden.

Es sei noch erwähnt, dass die Rollen 46 und 46' in unterschiedlichen Ebenen liegen, so dass die Rolle 46 nicht durch die Mulde 47 freigegeben werden kann. Für die Rolle 46 ist vielmehr eine Mulde vorgesehen, die sich in Übergabeposition 26 befindet und auf einer anderen Höhe liegt als die Mulde 47.

## Patentansprüche

1. Werkzeugmaschine mit zumindest einer in einem Arbeitsraum (11) verfahrbaren Werkzeugspindel (12a, 12b), an der eine Werkzeugaufnahme (15) zum Einspannen von Werkzeugen (16) vorgesehen ist, und einem Magazin (22) für Werkzeuge (16), die in die Werkzeugaufnahme (15) in der Werkzeugspindel (12a, 12b) einwechselbar sind, wobei das Magazin (22) eine in einer Transportrichtung (33) hin- und herfahrbare Transportkette (32) aufweist, an der Träger (24, 25, 38, 39, 41) zur Aufnahme von Werkzeugen (16) angeordnet sind,
wobei die Träger (24, 25, 38, 39, 41) sich im Wesentlichen quer zu der Transportrichtung (33) von der Transportkette (32) erstrecken und zumindest ein Träger (24, 25, 38, 39, 41) mindestens zwei Speicherplätze (28, 29, 37, 38, 40, 42) für Werkzeuge (16) aufweist, **dadurch gekennzeichnet, dass** der zumindest eine Träger (24, 25, 38, 39, 41) zumindest einen in Transportrichtung (33) und zumindest einen gegen Transportrichtung (33) weisenden Speicherplatz (28, 29, 37, 38, 40, 42) aufweist, der einen in oder gegen Transportrichtung (33) offenen U-förmigen Halter (35, 36) aufweist.

2. Werkzeugmaschine nach Anspruch 1, **dadurch gekennzeichnet, dass** der zumindest eine Träger (24, 25, 38, 39, 41) zumindest zwei im Wesentlichen quer zur Transportrichtung (33) nebeneinander liegende Speicherplätze (28, 29, 40) aufweist.

3. Werkzeugmaschine nach Anspruch 1 oder 2, **dadurch gekennzeichnet, dass** sie zwei Übergabepositionen (26, 27) aufweist, an denen Werkzeuge (16) zwischen einem Träger (24, 25, 38, 39, 41) und der Werkzeugaufnahme (15) überführbar sind, wobei an der ersten Übergabeposition (24) zumindest ein in Transportrichtung (33) weisender Speicherplatz (28, 29, 38) und an der zweiten Übergabeposition (27) zumindest ein gegen Transportrichtung (33) weisender Speicherplatz (28,', 29', 37) positionierbar ist.

4. Werkzeugmaschine nach Anspruch 3, **dadurch gekennzeichnet, dass** die Transportkette (32) auf den Arbeitsraum (11) zu weisend in einem Bogen (34) geführt ist, wobei beidseits des Bogens (34) eine der beiden Übergabepositionen (26, 27) vorgesehen ist.

5. Werkzeugmaschine nach einem der Ansprüche 1 bis 4, **dadurch gekennzeichnet, dass** sie zwei im Abstand (19) zueinander angeordnete Werkzeugspindeln (12a, 12b) aufweist.

6. Werkzeugmaschine nach Anspruch 5, soweit er auf Anspruch 3 oder 4 rückbezogen ist, **dadurch gekennzeichnet, dass** die beiden Übergabepositionen (26, 27) einen Mittenabstand (31) zueinander aufweisen, der dem Abstand (19) zwischen den beiden Werkzeugspindeln (12a, 12b) entspricht.

7. Werkzeugmaschine nach einem der Ansprüche 1 bis 6, **dadurch gekennzeichnet, dass** an jedem Träger (24, 25, 38, 39, 41) ein Verriegelungsteil (44) angeordnet ist, das ein in dem Träger (24, 25) aufgenommenes Werkzeug (16) formschlüssig hält.

8. Werkzeugmaschine nach Anspruch 7, **dadurch gekennzeichnet, dass** das Verriegelungsteil (44) das Werkzeug (16) freigibt, wenn sich der Träger (24, 25, 38, 39, 41) in einer Übergabeposition (26, 27) befindet.

9. Werkzeugmaschine nach Anspruch 8, **dadurch gekennzeichnet, dass** das Verriegelungsteil (44) eine quer zur Transportrichtung verschiebbare Verriegelungsplatte (44) mit einem Positionierteil (46, 46') ist, dem an der Übergabeposition (26, 27) ein weiteres Positionierteil (47) zugeordnet ist.

## Claims

1. Machine tool having at least one tool spindle (12a, 12b) which is travelling in a work space (11) and on which a tool receptacle (15) for clamping tools (16) is provided, and having a magazine (22) for tools (16) which can be introduced into the tool receptacle (15) in the tool spindle (12a, 12b), the magazine (22) having a transport chain (32) which can be moved back and forth in a transport direction (33) and on which carriers (24, 25, 38, 39, 41) are arranged for receiving tools (16), wherein the carriers (24, 25, 38, 39, 41) extend from the transport chain (32) essentially transversely to the transport direction (33), and at least one carrier (24, 25, 38, 39, 41) has at least two storage spaces (28, 29, 37, 38, 40, 42) for tools (16), **characterized in that** the at least one carrier (24, 25, 38, 39, 41) has at least one storage space (28, 29, 37, 38, 40, 42) pointing in the transport direction and at least one storage space (28, 29, 37, 38, 40, 42) pointing against the transport direction (33), whereby the storage space (28, 29, 37, 38, 40, 42) comprises a U-shaped holder (35, 36) open in or against the transport direction (33).

2. Machine tool according to claim 1, **characterized in that** the at least one carrier (24, 25, 38, 39, 41) has at least two storage spaces (28, 29, 40) lying side by side essentially transversely to the transport direction (33).

3. Machine tool according to claim 1 or 2, **characterized in that** it has two transfer positions (26, 27), at which tools (16) can be transferred between a carrier (24, 25, 38, 39, 41) and the tool receptacle (15), it being possible for at least one storage space (28, 29, 38) pointing in the transport direction (33) to be positioned at the first transfer position (26) and for at least one storage space (28', 29', 37) pointing against the transport direction (33) to be positioned at the second transfer position (27).

4. Machine tool according to claim 3, **characterized in that** the transport chain (32) is pointing towards the work space (11) where it is guided along an arc (34), each one of the two transfer positions (26, 27) being provided on either side of the arc (34).

5. Machine tool according to any one of claims 1 to 4, **characterized in that** it has two tool spindles (12a, 12b) arranged at a distance (19) apart from each other.

6. Machine tool according to claim 5, in so far as it refers back to claim 3 or 4, **characterized in that** the two transfer positions (26, 27) have a center distance (21) which corresponds to the distance (19) between the two tool spindles (12a, 12b).

7. Machine tool according to any one of claims 1 to 6, **characterized in that** a locking part (44) is arranged on each carrier (24, 25, 38, 39, 41) and holds a tool (16), accommodated in the carrier (24, 25), in a positive-locking manner.

8. Machine tool according to claim 7, **characterized in that** the locking part (44) releases the tool (16) when the carrier (24, 25, 38, 39, 41) is located in a transfer position (26, 27).

9. Machine tool according to claim 8, **characterized in that** the locking part (44) is a locking plate (44) displaceable transversely to the transport direction (32) and having a positioning part (46, 46'), to which a further positioning part (47) is assigned at the transfer position (26, 27).

## Revendications

1. Machine-outil avec au moins une broche à outils (12a, 12b) pouvant être déplacée dans un espace de travail (11), sur laquelle est prévu un logement à outils (15) pour le serrage des outils (16), et un magasin (22) pour outils (16), qui peuvent être échangés dans le logement à outils (15) dans la broche à outils (12a, 12b), le magasin (22) comprenant une chaîne de transport (32) qui se déplace selon un mouvement de va-et-vient dans un sens de transport (33), sur laquelle sont disposés des supports (24, 25, 38, 39, 41) pour la réception des outils (16),
les supports (24, 25, 38, 39, 41) s'étendant essentiellement transversalement au sens de transport (33) de la chaîne de transport (32), et au moins un support (24, 25, 38, 39, 41) comprenant au moins deux emplacements de réservoirs (28, 29, 37, 38, 40, 42) pour outils (16),
**caractérisé en ce que** le au moins un support (24, 25, 38, 39, 41) comprend au moins un emplacement de réservoir (28, 29, 37, 38, 40, 42) orienté dans le sens de transport (33) et au moins un emplacement de réservoir (28, 29, 37, 38, 40, 42) orienté à l'inverse du sens de transport (33), lequel comprend un porte-outil (35, 36) en U ouvert dans le sens de transport (33) ou à l'inverse de celui-ci.

2. Machine-outil selon la revendication 1, **caractérisée en ce que** le au moins un support (24, 25, 38, 39, 41) comprend au moins deux emplacements de réservoir (28, 29, 40) adjacents essentiellement transversaux au sens de transport (33).

3. Machine-outil selon la revendication 1 ou 2, **caractérisée en ce qu'**elle comprend deux positions de transfert (26, 27), dans lesquelles les outils (16) peuvent être transportés entre un support (24, 25, 38, 39, 41) et le logement à outils (15), au moins un emplacement de réservoir (28, 29, 38) orienté dans le sens de transport (33) pouvant être positionné dans la première position de transfert (24), et au moins un emplacement de réservoir (28', 29', 37) orienté à l'inverse du sens de transport pouvant être positionné (33) dans la seconde position de transfert (27).

4. Machine-outil selon la revendication 3, **caractérisée en ce que** la chaîne de transport (32) est dirigée sur l'espace de travail (11) en étant affectée dans un coude (34), moyennant quoi une des deux positions de transfert (26, 27) est prévue des deux côtés du coude (34).

5. Machine-outil selon l'une des revendications 1 à 4, **caractérisée en ce qu'**elle comprend deux broches à outils (12a, 12b) disposées à distance (19) l'une de l'autre.

6. Machine-outil selon la revendication 5, dans la mesure où celle-ci est dépendante de la revendication 3 ou 4, **caractérisée en ce que** les deux positions de transfert (26, 27) présentent une distance intermédiaire (31) entre elles, qui correspond à la distance (19) entre les deux broches à outils (12a, 12b).

7. Machine-outil selon une des revendications 1 à 6, **caractérisée en ce qu'**une pièce de verrouillage (44) est disposée sur chaque support (24, 25, 38, 39, 41) qui maintient par complémentarité de forme un outil (16) reçu dans le support (24, 25).

8. Machine-outil selon la revendication 7, **caractérisée en ce que** la pièce de verrouillage (44) libère l'outil (16), lorsque le support (24, 25, 38, 39, 41) se trouve dans une position de transfert.

9. Machine-outil selon la revendication 8, **caractérisée en ce que** la pièce de verrouillage (44) est une plaque de verrouillage (44) coulissante transversalement au sens de transport avec une pièce de positionnement (46, 46') à laquelle est associée une autre pièce de positionnement (47) dans la position de transfert (26, 27).
